# EUROPEAN PATENT SPECIFICATION

(11) **EP 1 193 482 B1**
(45) Date of publication and mention of the grant of the patent: **01.02.2006**
(21) Application number: 00402699.3
(22) Date of filing: 29.09.2000
(51) Int. Cl.: G01J 3/18

(54) **Spectroscope**
Spektroskop
Spectroscope

(43) Date of publication of application: 03.04.2002
(73) Proprietor: Horiba Jobin Yvon S.A.S., 91160 Longjumeau (FR)
(72) Inventor: Ukon, Juichiro, 75013 Paris (FR)
(74) Representative: Michelet, Alain

(56) References cited:
- US-A- 3 753 618
- US-A- 4 553 840
- PATENT ABSTRACTS OF JAPAN vol. 175, no. 09, 13 September 1993 (1993-09-13) & JP 05 133807 A (RES DEV CORP ET AL), 28 May 1993 (1993-05-28)

## Description

The present invention relates to a spectroscope to be used in various spectral analyses including, for example, an atomic emission spectral analysis, Raman spectral analysis, etc.

In an atomic emission spectral analysis, broad wavelength range and high spectral decomposition capacity are required, for which a highly sensitive spectroscope is necessitated. In general, there is employed a spectroscope having disposition of the optical elements called Zerni-Turner disposition (hereinafter to be referred to as CT spectroscope).

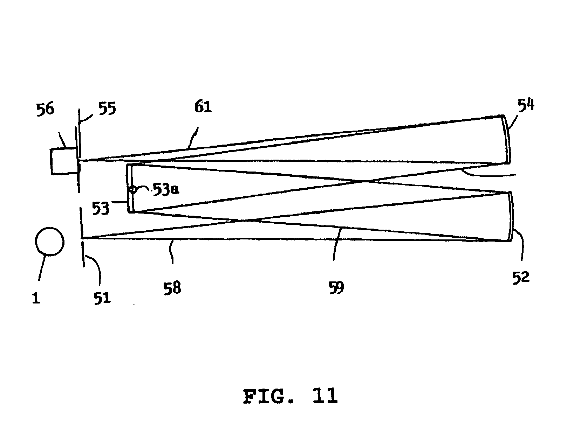

FIG. 11 schematically shows the constitution of conventional CT spectroscope. In this figure, numeral 51 denotes an input slit, 52 a first concave mirror as a collimator mirror, 53 a grating (diffraction grating) which rotates around the rotary axis 53a perpendicular to the paper face, 54 a second concave mirror as a focusing mirror, 55 an output slit, 56 a detector comprising a single detector, and 57 a luminous source.

In the above CT spectroscope, the light 58 from the luminous source 57 is incident on the first concave mirror 52 through the input slit 51. The light 58 incident on the first concave mirror 52 becomes parallel flux of light 59 on the second plane mirror, and is incident at an angle of incidence in the grating 53 rotating around the rotary axis 53a. This grating 53 spectrally spreads the light 59 incident at a certain angle of incidence in planes orthogonal with the grid line (not illustrated) parallel with the rotary axis 53a. The light 60 spectrally spread by the grating 53 is condensed with the second concave mirror 54, image formed in the input slit 55, and thereafter incident on the detector 56.

When the grating 53 is rotated, the angle of incidence of the light 59 varies in coordination with the angle of rotation, light is spectrally divided, and the central wavelength of the light 61 condensed on the light receiving face of the detector 56 varies. Accordingly, by measuring the intensity of the light 61 received by the detector 56 while rotating the grating 53, a spectrum of the light 61 is obtainable.

However, in the above CT spectroscope, light is incident obliquely to each of the concave mirrors 52, 54 of the first and second concave mirrors, that is in a so-called off-axis manner. Thus, the light fluxes incident off-axis on the concave mirrors 52, 54 show strong aberrations such as coma and astigmatism, to cause remarkable distortion of the spectrally focused images, with the result that it is not possible to separate favorably the nearby light emission lines.

To obviate these problems, when high resolution is necessitated, conventionally there have been adopted such proceedings as to increase the focal distances of the first and second concave mirrors 52, 54 or to enlarge the aperture of them. However, when such proceedings are adopted, there are problems such as not only enlargement in the size of the spectroscope but also constriction of the throughput of light (energy effect), and it is impossible to fully eliminate the above aberrations such as coma and astigmatism as mentioned above.

A spectroscope other than the above CT spectroscope, also known, is an echelle spectroscope utilizing echelle diffraction grating and secondary dispersion element. According to this echelle spectroscope, generally it is possible to measure the desired wavelength range without scanning the echelle diffraction grating, but in view of the restriction of the area of the detector, slit image is small, and naturally the throughput of light is small. And, even in this echelle spectroscope, due to the oblique incidence of light to the concave mirror, there occurs the problems similar to those of the above CT spectroscope. In the echelle spectroscope, the apparatus is more frequently used in scanless mode, thereby reducing the occurrence of aberration problems.

Document US 4,553,840 discloses a double monochromator. Document PAJ 05133807 (Patent Abstract of Japan) discloses a high-speed spectroscope.

The present invention has been made with particular attention paid to the points mentioned above. Its object is to provide a spectroscope in which aberrations such as coma and astigmatism are remarkably reduced, which shows large throughput of light, and which allows spectrometry in high resolution and high precision.

In order to attain the above object, the invention is characterized in that, in a spectroscope comprising two concave mirrors, the incident light axis and the outgoing light axis are set to coincide in the concave mirrors.

In the spectroscope constituted as above, aberrations such as coma and astigmatism attributed to the use of the concave mirror off-axis can be obviated, and the focusing distortion in case of the use of an imaging device for the detector can be decreased.

There are several embodiments of the invention:

The spectroscope according to a first embodiment of the invention comprises all the features recited in claims 1.

Additional embodiments are defined in dependent claims.

The light detecting part used in the invention is provided at the position of the spectrum on which the output light from the second concave mirror forms image on the focusing face of the second concave mirror. It may be so set that an output slit is provided on the position of said spectrum so that the light going out there through may be detected with the light detector such as a photoelectron amplification tube. Alternatively, an image-forming device such as CCD may be provided on the position of the image-forming spectrum. As the image-forming device, any element capable of detecting the position may be used such as a CID detector.

It is to be understood that the spectroscope according to the invention comprises two concave mirrors and that in any of those concave mirrors, the main beam of the light flux to them coincides with the main axis of the concave mirror, namely, they are on the same axis. Accordingly, the main beam and the beams in the vicinity thereof scarcely show coma or astigmatism. Also, with respect to the beams most distant from the main beam of the light fluxes, coma and astigmatism are remarkably small in comparison with the case of off-axis.

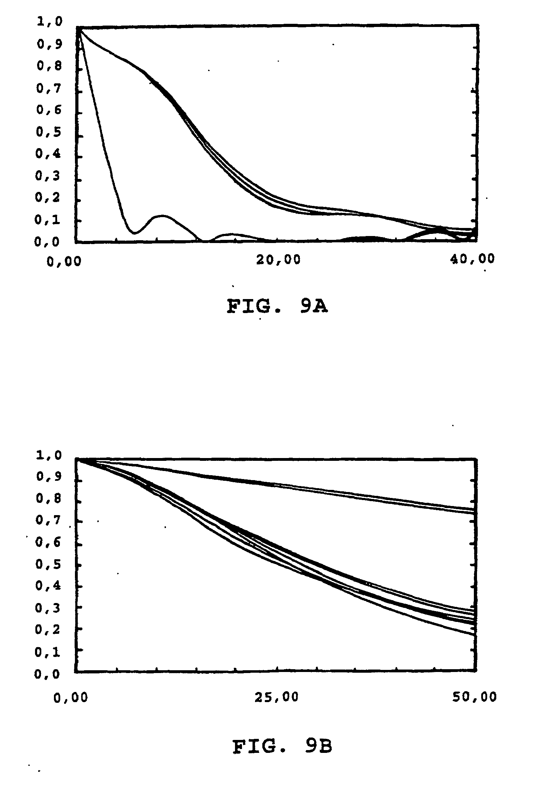

FIG. 9 (A) and (B) show MTF (Modulation Transfer Function) characteristic curves of the spectroscope. FIG. 9 (A) shows MTF curve of conventional CT spectroscope having a focal length of 1 m and an aperture ratio of 8, and same figure (B) shows MTF curve of the present invention spectroscope having a focal length of 0.4 m and an aperture ratio of 6. As the focal distances of the two concave mirrors are the same in any case despite the different focal distances of the two spectroscopes, the image forming multiple ratios is 1 : 1.

In FIG. 9 (A) and (B), curves represent the light fluxes in tangential (T) and sagittal (S) directions out of the light fluxes outgoing from the center of the port of incidence. The considered output comes respectively from light fluxes from the 4 mm and 2 mm height position from the center of the port of incidence.

It can be seen from the above FIG. 9 (A) that, in the conventional CT spectroscope astigmatism is extremely large, and the image forming resolution capacities are greatly different between T and S. Furthermore, it can be seen that the output light from a point of the port of incidence does not gather at a point on the image forming surface but forms a long lengthwise image.

On the other hand, in the spectroscope of this invention, even those having the constitutions of the embodiments defined in the claims have the same image forming characteristics. That is to say, as shown in the above FIG. 9 (B), the light flux outgoing from the center of the port of incidence has the same characteristics in both T direction and S direction, because the main beams are on the axis of the two concave mirrors. In addition, the light flux outgoing from any port of incidence may have nearly same space resolution as the light flux outgoing from the center.

Furthermore, in consideration to the use of a device made by arranging many fine detectors in a plane (hereinafter to be referred to as imaging device), the light flux outgoing from the center of the port of incidence is spectrally dispersed, and the image formation characteristics at the positions distant by 3 mm and 5 mm from the center spectral image at the port of incidence are represented. When these five characteristic curves are observed, it can be seen that in both T direction and S direction they are not only not different in the image forming characteristics but also they maintain the image forming characteristics.

In the spectroscope of the invention, aperture is formed at the center of the plane mirror or grating, and there is proportionally a negative phase in that the light flux is not effectively utilized. However, this disadvantage can be sufficiently covered by the improvement in light intensity density on the image forming surface resulting from the excellent image forming characteristics as mentioned above. Accordingly, according to this invention, aberrations such as coma and astigmatism which acted to cause degradation of spectral performance in the conventional spectroscope can be remarkably reduced, and as a result it is possible to use a concave mirror having short focal distance and small aperture ratio, so that a miniature, bright spectroscope having high resolution can be obtained.

In the spectroscope of the invention, there may be used as a detector an imaging device, with addition of an element for spectrally dispersing light (the second spectral dispersion element) at an angle of 45° - 135° with the direction of dispersion of light by grating.

That is to say, in the spectroscope having addition of the second spectral dispersion element, by utilizing a high order spectral dispersion of the grating which is a first spectral dispersion element more than two spectra are focused on the imaging device, thereby making it possible to cover a broad wavelength range.

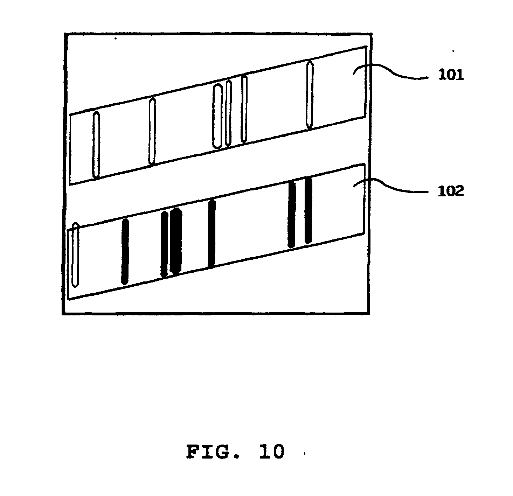

FIG. 10 shows a spectrum band on an imaging device at the time when the second dispersion spectral element is provided. Here is shown a scene in which the primary beam and the secondary beam which are to be divided by the grating that is the first spectral dispersion element are separated by the second spectral dispersion element, and simultaneously focused on a single imaging device. Theoretically, it is possible to cover up to the spectrum band of higher order, but the level of order that can be utilized is determined from the height of the input slit and the diffraction efficiency of the higher order light.

In the spectroscope constituted as above, there is an effect of allowing to perform the spectral determination which had been only the measurement of specified order more efficiently, in addition to the effects as stated above.

In addition, there may be used as a grating a bi-directional spectral dispersion element for spectrally dispersing the incident light in two different directions.

### BRIEF DESCRIPTION OF THE DRAWINGS

These and other advantages of the present invention will be better understood by referring to the accompanying drawings, in which:
FIG. 1 is a view to show a first embodiment;
FIG. 2 is a view to show a second embodiment;
FIG. 3 is a view to show a third embodiment;
FIG. 4 is a view to show a fourth embodiment;
FIG. 5 is a view to show a fifth embodiment;
FIG. 6 is a view to show a sixth embodiment;
FIG. 7 is a view to show a seventh embodiment;
FIG. 8 is a view to show an eighth embodiment;
FIG. 9 is a view for illustrating the performances in the prior art spectroscope and the spectroscope of this invention;
FIG. 10 is a view for illustrating the function of the second spectral dispersion element;
FIG. 11 is a view for illustrating the prior art.

### DETAILED DESCRIPTION OF THE INVENTION

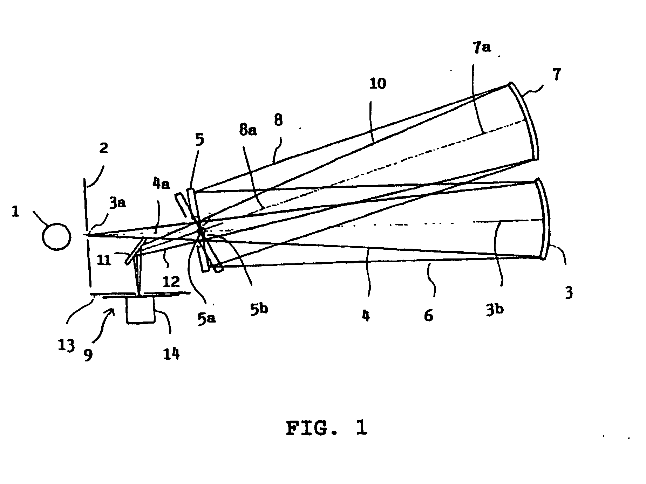

Hereinafter, preferred embodiments of the invention will be described with reference to the appended drawings. FIG. 1 shows a first embodiment of the invention, wherein two concave mirrors and a grating mainly constitute a spectroscope. Namely, in FIG. 1, the numeral 1 shows a light emission source. Part 2 is a slit through which the light from the light source 1 is incident. Part 3 is a first concave mirror as a collimating mirror to be provided rearwards the input slit 2. The first concave mirror 3 comprises, for example, a spherical mirror or a parabolic mirror, and is provided so that its focus 3a coincides with the position of the input slit 2, and its main axis 3b coincides with the axis 4a of the light flux 4 which is incident through the input slit.

Numeral 5 denotes a grating as a dispersion type spectral element to be provided on a light path connecting a slit 2 with a first concave mirror 3. It comprises for example a plane diffraction grid, on which the light 6 outgoing from the first concave mirror 3 is incident. And, this grating 5 is constituted to rotate centering on a rotary axis 5a provided in a direction vertical to the paper face, and is constituted so that the optional wavelength which is desired to be measured can be selected. Further, in this grating 5, an aperture 5b is formed at its central part. This aperture 5b is formed in a size of an extent that does not prevent passage of the light 4 that is directed to the first concave mirror 3 through the input slit 2 and passage of the light 10 outgoing from the second concave mirror 7 (to be described later) and directed towards the light detecting part 9 (to be described later), respectively.

The numeral 7 shows the second concave mirror to be provided on the position opposite to the grating 5, and the light 8 outgoing from the grating 5 is incident on it. This second concave mirror 7 comprises, for example, a spherical mirror or a parabolic mirror, and is provided so that its main axis 7a coincides with the axis 8a of the light 8 outgoing from the grating 5, and that it forms an angle with the first concave mirror 3 in a range between an excess of 0° and less than 90°.

The part 9 is a light detecting part, being provided in a position between the input slit 2 and the grating 5 and where the light 10 outgoing from the second concave mirror 7 passes through the aperture 5b formed on the grating 5 and condenses. In this embodiment, in view of the relation of installation space, the light detecting part is constituted so that the light 12 that has passed through the above aperture 5b forms image by a plane mirror 11, or such that an output slit 13 is provided on the focal point (image forming face) of the second concave mirror 7 so as to convert the light that has passed through the output slit 13 into an electric signal with a single light detector 14 such as photoelectron image multiplying tube (hereinafter to be PMT) or silicon detector. In order to obtain spectral signal, the grating 5 may be gradually rotated. As to the light detecting part 9, in place of providing an output slit 13 and a single light detector 14, there may be used an imaging device provided on its surface with a large number of fine detectors, and such device may be disposed on the image forming surface above. Reading out of the spectral signal in this case becomes possible by taking out the signals from each of the delicate detectors in the above imaging device.

It is preferable for the grating 5 to be so set that the ratio of the distance between the grating 5 and the input slit 2 to the distance between the grating 5 and the first concave mirror 3 becomes 1 : 19 -1 : 1, and the ratio of the distance between the grating 5 and the light detecting part 9 to the distance between the grating 5 and the second concave mirror 7 becomes 1 : 19 - 1 : 1. Also, in case there is sufficient space between the grating 5 and the input slit, it may be so arranged that, without providing a plane mirror 11, a light detecting part 9 is provided on the condensing position of the second concave mirror 7.

The operation of the spectroscope having the above constitution is explained. The output light from the light source 1 is incident on the input slit 2, and the light 4 outgoing from it passes through the aperture 5b of the grating 5 and projects the first concave mirror 3 while diffusing. As the focus 3a of the first concave mirror 3 coincides with the position of the input slit 2, the light 6 outgoing from the first concave mirror 3 becomes parallel light flux. And, as the main axis 3b of the first concave mirror 3b coincides with the axis 4a of the incident light 4 here, coma and astigmatism aberrations to be sustained by the light 6 outgoing from the first concave mirror 3 are extremely small.

And, with respect to the light 6 outgoing from the first concave mirror 3, as its incident light 4 coincides with the main axis 3b of the first concave mirror 3, it is again reflected on its main axis 3b. The reflected light 6 irradiates the grating 5. And, the parallel light flux 6 that has irradiated the grating 5 is spectrally divided by the grating 5 and dispersed. The spectrally divided light flux becomes parallel light flux based on individual wavelength.

The specific spectrally divided parallel light flux 8 outgoing from the above grating 5 is incident on the second concave mirror 7 disposed so as to define an optional angle between the excess of 0° and less than 90° with the main axis 3b of the first concave mirror 3. In this case, as the axis 8a of the above parallel light flux 8 coincides with the main axis 7a of the second concave mirror 7, the axis of the reflection light 10 in the second concave mirror 7 coincides with the main axis 7a of the second concave mirror 7, and the coma and astigmatism aberrations sustained by the reflective light 10 are extremely small.

The light 10 outgoing from the above second concave mirror 7 goes to the plane mirror 11 through the aperture 5b of the grating 5, and further forms images of spectral band in the spectral range selected at the rotary angle of the grating 5 at the focal position of the second concave mirror 7. As the light detecting part 9 is provided on this focusing position, the focused spectral band is converted into an electric signal by the light detecting part 9.

In the first embodiment described above, although it is necessary to provide the grating 5 with an aperture 5b, the number of items of the optical parts such as concave mirror and plane mirrors to be used can be small, and the whole spectroscope can be constituted in a compact size.

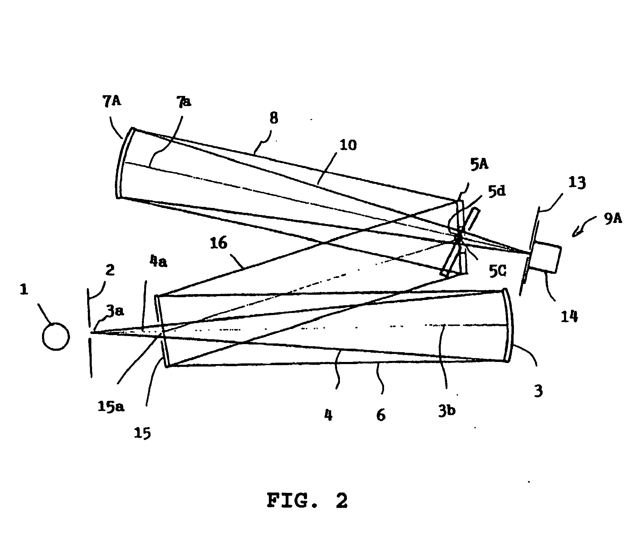

FIG. 2 shows the second embodiment of the present invention. In this embodiment, the spectroscope is constituted mainly by two concave mirrors and one plane mirror and grating. In FIG. 2, the same marks as those of FIG. 1 show the same things. In this embodiment, the respective constitutions of the input slit 2 and the first concave mirror 3 and their positional relations 2, 3 are same as those of the first embodiment, but it is greatly different in the point that a plane mirror is provided on the light path connecting these 2 and 3, and made to irradiate the light led through this plane mirror on the grating 5.

A plane mirror 15 is provided on the light path connecting the input slit 2 and the first concave mirror 3. A grating 5A is provided on the position opposite to the plane mirror 15, and further, a second concave mirror 7A is provided on the position opposite to this grating 5A. A light detecting part 9A is provided at the focal position of the second concave mirror 7A.

To explain this in more detail, the plane mirror 15 has an aperture 15a formed at its central part. This aperture 15a is formed in a size of an extent not to interrupt passage of the light 4 going to the concave mirror 3 through the input slit 2. And, this plane mirror 15 is disposed so as to deflect the light 6 outgoing from the first concave mirror 3 at an angle between excess of 0 degree and less than 180 degrees, and direct it to the grating 5A (to be described later).

The above grating 5A comprises, for example, a plane diffraction grating, on which the light 16 outgoing from the plane mirror 15 is incident. And, this grating 5A is constituted to rotate centering on the rotary axis 5c provided in the direction perpendicular to the paper face, being so constituted as to permit selection of optional wavelength desired to measure. This grating 5A has an aperture 5d at its central part. This aperture 5d is formed in a size of an extent not to prevent passage of the light 10 outgoing from the second concave mirror 7 and directed towards the light detecting part 9.

The second concave mirror 7 is provided on the position opposite to the grating 5A so that its main axis 7a coincides with the axis of the light 8 outgoing from the grating 5A. And, a light detecting part 9A is provided on the condensing position of this second concave mirror 7. This light detecting part 9A is constituted, in the same manner as in the light detecting part 9 of the first embodiment, by combination of the output slit 13 with the single light detector 14 or by the imaging device.

Preferably, the plane mirror 15 is to be so set that the ratio of the distance between the plane mirror 15 and the input slit 2 to the distance between the plane mirror 15 and the first concave mirror 3 becomes 1 : 19 - 1 : 1, and as to the grating 5A, the ratio of the distance between the grating 5A and the light detecting part 9 to the distance between the grating 5A and the second concave mirror 7A becomes 1 : 19 - 1 : 1.

The operation of the spectroscope having the above constitution is explained. The output light from the light source 1 is incident on the input slit 2, and the light 4 outgoing from it passes through the aperture 15a of the plane mirror 15 and irradiates the first concave mirror 3 while diffusing. As the focus 3a of the first concave mirror 3 coincides with the position of the input slit 2, the light 6 outgoing from the first concave mirror 3 becomes parallel light flux. And, as the main axis 3b of the first concave mirror 3 coincides with the axis 4a of the incident light 4 here, coma and astigmatism aberrations to be sustained by the light 6 outgoing from the first concave mirror 3 are extremely small.

And, with respect to the light 6 outgoing from the first concave mirror 3, as its incident light 4 coincides with the main axis 3b of the first concave mirror 3, it is again reflected on its main axis 3b. The reflected light 6 irradiates the plane mirror 15. And, this plane mirror 15 deflects the incident parallel light flux 6 at an optional angle in the range between the excess of 0 degree and less than 180 degrees, and irradiates the parallel light flux 16 on the grating 5A.

The parallel light flux 16 irradiated on the grating 5A is spectrally divided by the grating 5A and dispersed. The spectrally divided light flux 8 forms parallel light flux in the unit of the wavelength. The specific spectrally divided parallel light flux 8 outgoing from the grating 5A is incident on the second concave mirror 7A disposed so that the main axis 7a is to define an optional angle between the excess of 0° and less than 90° with the main axis 3b of the first concave mirror 3. In this case, as the axis 8a of the above parallel light flux 8 coincides with the main axis 7a of the second concave mirror 7A, the axis of the reflection light 10 in the second concave mirror 7A coincides with the main axis 7a of the second concave mirror 7A, and the coma and astigmatism aberrations sustained by the reflective light 10 are extremely small.

The light 10 outgoing from the above second concave mirror 7A, through the aperture 5d of the grating 5A, forms images of spectral band in the spectral range selected at the rotary angle of the grating 5A at the focal position of the second concave mirror 7. As the light detecting part 9A is provided on this image forming position, the focused spectral band is converted to an electric signal by the light detecting part 9A.

In the second embodiment described above, there is a necessity for the grating 5 to be provided with an aperture 5b, but, in this embodiment the number of items of the optical members such as concave mirror and plane mirrors to be used can be small, and the whole spectroscope can be constituted in a compact size. Moreover, due to the small amount of light to be incident on the grating 5, strayed rays are scarce, and generation of signal noise is suppressed.

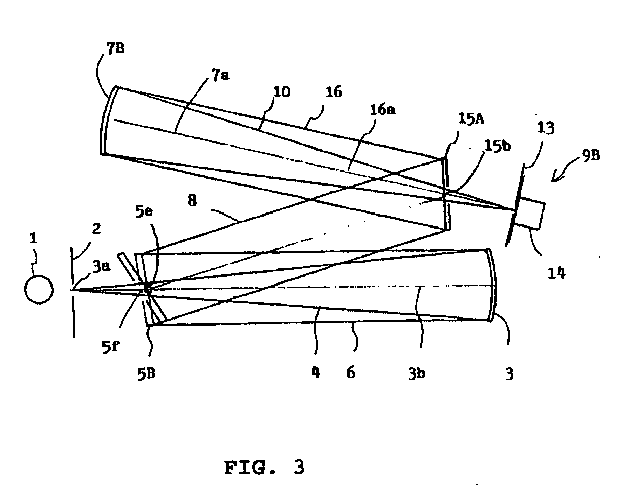

FIG. 3 shows the third embodiment of the present invention. In this embodiment, the spectroscope is constituted mainly by two concave mirrors and one plane mirror and grating. In this respect, this embodiment is same as the second embodiment, but it is different from the second embodiment in the positions of arranging the plane mirror and grating. In FIG. 3, the same marks as those of FIG. 1 show the same things.

That is to say, a grating 5B is provided on the light path connecting the input slit 2 and the first concave mirror 3. A plane mirror 15A is provided on the position opposite to the grating 5B, and further, a second concave mirror 7B is provided on the position opposite to this plane mirror 15A. A light detecting part 9A is provided at the focal position of the second concave mirror 7B.

To explain this in more detail, the above grating 5B comprises, for example, a plane diffraction grating, on which the light 6 outgoing from the first concave mirror 3 is incident. And, this grating 5B is constituted so as to rotate at the center of the rotary axis 5e provided in a direction vertical to the paper face, being constituted to permit selection of the optical wavelength desired to be measured. Also, an aperture 5f is formed at the central part of the grating 5B. This aperture 5f is formed in a size of an extent not to interrupt passage of the light 4 going to the concave mirror 3 through the input slit 2.

The plane mirror 15A is disposed so as to deflect the light 8 outgoing from the grating 5B at an angle exceeding 0 degree and less than 180 degrees, and direct it to the second concave mirror 7B. And, the plane mirror 15A has an aperture 15b at its central part. This aperture 15b is formed into a size to an extent not to interrupt passage of the light 10 directed to the light detecting part 9B from the second concave mirror 7B.

The second concave mirror 7B is provided on the position opposite to the plane mirror 15A so that its main axis 7a coincides with the axis of the light 16 outgoing from the plane mirror 15A. And, a light detecting part 9B is provided on the condensing position of this second concave mirror 7. This light detecting part 9B is constituted, in the same manner as in the light detecting part 9 of the first embodiment or the light detecting part 9A of the second embodiment, by combination of the output slit 13 with the single light detector 14 or by the imaging device.

Preferably, the grating 5B is to be disposed so that the ratio of the distance between the grating 5B and the input slit 2 to the distance between the plating 5B and the first concave mirror 3 becomes 1 : 19-1:1, and as to the plane mirror 15A, the ratio of the distance between the plane mirror 15A and the light detecting part 9 to the distance between the plane mirror 15A and the second concave mirror 7B becomes 1 : 19 - 1 : 1.

The operation of the spectroscope having the above constitution is explained. The output light from the light source 1 is incident on the input slit 2, and the light 4 outgoing from it passes through the aperture 5e of the grating 5B and irradiates the first concave mirror 3 while diffusing. As the focus 3a of the first concave mirror 3 coincides with the position of the input slit 2, the light 6 outgoing from the first concave mirror 3 becomes parallel light flux. And, as the main axis 3b of the first concave mirror 3 coincides with the axis 4a of the incident light 4 here, coma and astigmatism aberrations to be sustained by the light 6 outgoing from the first concave mirror 3 are extremely small.

And, with respect to the light 6 outgoing from the first concave mirror 3, as its incident light 4 coincides with the main axis 3b of the first concave mirror 3, it is again reflected on its main axis 3b. The reflected light 6 irradiates the grating 5B.

The parallel light flux 6 irradiated on the grating 5B is spectrally divided by the grating 5B and dispersed. The spectrally divided light flux 8 forms parallel light flux in the unit of the wavelength. The specific spectrally divided parallel light flux 8 outgoing from the grating 5B is incident on the plane mirror 15A. a second concave mirror 7B

The light 8 incident on the plane mirror 15A is deflected at an optional angle between the excess of 0° and less than 170°, and is incident to the second concave mirror 7B. In this case, as the main axis 7a of the second concave mirror 7B coincides with the axis 16a of parallel light 16 from the plane mirror 15A, the axis of the reflective light 10 in the second concave mirror 7B, coincides with the main axis 7a of the second concave mirror 7B, and the coma and astigmatism aberrations sustained by the reflective light 10 are extremely small.

The light 10 outgoing from the above second concave mirror 7B, through the aperture 15b of the plane mirror 15A, forms images of spectral band in the spectral range selected at the rotary angle of the grating 5B at the focal position of the second concave mirror 7A. As the light detecting part 9B is provided on this image forming position, the focused spectral band is converted to an electric signal by the light detecting part 9B.

In the third embodiment described above, there is a necessity for the grating 5 to be provided with an aperture 5b, but, in this embodiment the number of items of the optical members such as concave mirror and plane mirrors to be used can be small, and the whole spectroscope can be constituted in a compact size. In addition, as the amount of light to be incident on the grating 5 is small, strayed rays are scarce, and generation of signal noise is suppressed.

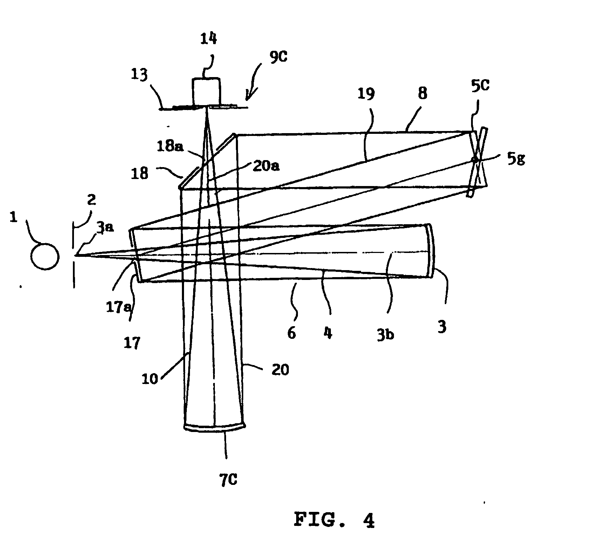

FIG. 4 shows the fourth embodiment of the present invention. In this embodiment, mainly two concave mirrors, two plane mirrors and grating, constitute the spectroscope. In FIG. 4, the same marks as those of FIG. 1 show the same things. In this respect, this embodiment makes no difference from the second embodiment in the respective constitutions of the input slit 2 and the first concave mirror 3, the positional relations of those 2 and 3, and the point that a single plane mirror is provided on the light path connecting these elements 2, 3, but it is different from the second embodiment in the points of arranging other plane mirror and irradiating on the second concave mirror through the plane mirror.

That is to say, a first plane mirror 17 is provided on the light path connecting the input slit 2 and the first concave mirror 3. A grating 5C is provided on the position opposite to the first plane mirror 17, and further, a second plane mirror 18 is provided on the position opposite to the grating 5C, for bending the light from the grating 5C for example by 90 degrees and reflecting. A second concave mirror 7C is provided on the position opposite to the second plane mirror 18, and a light detector 9C is provided on the focal position of the second concave mirror 7C.

To explain this in more detail, the above first plane mirror 17 is formed in the same manner as the plane mirror 15 in the second embodiment. That is to say, this first plane mirror 17 has an aperture 17a formed at the central part. This aperture 17a is formed in a size of an extent not to interrupt passage of the light 4 going to the concave mirror 3 outgoing to the first concave mirror 3 through the input slit 2. And, this first plane mirror 17 is disposed so as to deflect the light 6 outgoing from the first concave mirror 3 at an angle exceeding 0 degree and less than 180 degrees, and direct it to the grating 5C.

The grating 5C comprises, for example, a plane diffraction grating, on which the light 19 outgoing from the first plane mirror 17 is incident. And, this grating 5C is constituted so as to rotate centering on the rotary axis 5g provided in a direction vertical to the paper face, so as to permit selection of an optional wavelength desired to be measured.

The second plane mirror 18 is provided on the position opposite to the grating 5C and constituted so as to deflect the light 8 outgoing from the grating 5C at an optional angle in the range between excess of 0 degree and less than 180 degrees (for example, 90 degrees). And, this second plane mirror 18 has an aperture 18a formed at its central part. This aperture 18a is formed in a size of an extent not to prevent passage of the light 10 outgoing from the second concave mirror 7C (to be described later) and directed towards the light detecting part 9C (to be described later).

The second concave mirror 7C is provided on the position opposite to the second plane mirror 18 so that its main axis 7a coincides with the axis of the light 20 outgoing from the second plane mirror 18. And, a light detecting part 9C is provided on the condensing position of this second concave mirror 7C. This light detecting part 9C is constituted, in the same manner as in the light detecting part 9 of the first embodiment, by combination of the output slit 13 with the single light detector 14 or by the imaging device.

Preferably, the first plane mirror 17 is to be disposed so that the ratio of the distance between the first plane mirror 17 and the input slit 2 to the distance between the first plane mirror 17 and the first concave mirror 3 becomes 1 : 19 -1 : 1. With regard to the second plane mirror 18, it is preferable for the disposition to be made so as to make the ratio of the distance between the second plane mirror 18 and the light detecting part 9C to the distance between the second plane mirror 18 and the second concave mirror 7B to be 1 : 19 - 1 : 1.

The operation of the spectroscope having the above constitution is explained. The output light from the light source 1 is incident on the input slit 2, and the light 4 outgoing from it passes through the aperture 17a of the first plane mirror 17 and irradiates the first concave mirror 3 while diffusing. As the focus 3a of the first concave mirror 3 coincides with the position of the input slit 2, the light 6 outgoing from the first concave mirror 3 becomes parallel light flux. And, as the main axis 3b of the first concave mirror 3 coincides with the axis 4a of the incident light 4 here, coma and astigmatism aberrations to be sustained by the light 6 outgoing from the first concave mirror 3 are extremely small.

And, with respect to the light 6 outgoing from the first concave mirror 3, as its incident light 4 coincides with the main axis 3b of the first concave mirror 3, it is again reflected on its main axis 3b. The reflected light 6 irradiates the first plane mirror 17. And, the first plane mirror 17 deflects the incident parallel light flux 6 at an optional angle exceeding 0 degree and less than 180 degrees, and irradiates the parallel light flux 16 to the grating 5C.

The parallel light flux 19 irradiated on the grating 5C is spectrally divided by the grating 5C and dispersed. The spectrally divided light flux 8 forms parallel light flux in the unit of the wavelength. The specific spectrally divided parallel light flux 8 outgoing from the grating 5C is incident on the second plane mirror 18, by which it is deflected by 90 degrees, and is incident on the second concave mirror 7C as parallel light flux 20. In this case, as the axis 20a of the parallel light flux 20 coincides with the main axis 7a of the second concave mirror 7A, the axis of the reflective light 10 in the second concave mirror 7A coincides with the main axis 7a of the second concave mirror 7A, and astigmatism aberrations sustained by the reflective light 10 are extremely small.

The light 10 outgoing from the above second concave mirror 7A, through the aperture 18a of the second plane mirror 18, forms images of spectral band in the spectral range selected at the rotary angle of the grating 5C at the focal position of the second concave mirror 7A. As the light detecting part 9C is provided on this image forming position, the focused spectral band is converted to an electric signal by the light detecting part 9C.

In the fourth embodiment described above, different from other embodiments, there is no necessity to provide the grating 5 with an aperture 5b, and its manufacture is easy, and at low cost. And, in this embodiment, two plane mirrors 17, 18 are equipped, by which optional light path can be set, thus providing extremely high freedom for the disposition of the respective members, permitting to meet various requests. In addition, the amount of light to be incident on the grating 5 is small, and accordingly strayed rays are scarce, so that generation of signal noise is suppressed.

The present invention is not limited to the first to the fourth embodiments above but may be practiced in various modifications. In any of the above embodiments, only a single grating 5 (or any of 5A, 5B, 5C; hereinafter to be referred to as the first spectral dispersion element) of the spectral dispersion element is provided. However, there may be provided a second spectral dispersion element for dispersing the spectrum in a direction defining any of the angles of 45 to 135 degrees, e.g., 90 degrees, with the direction of dispersion of the first spectral dispersion element 5 (or any one of 5A, 5B, and 5C). That is to say, assuming that the first spectral dispersion element 5 disperses in a horizontal direction, the second spectral dispersion element disperses in a vertical direction.

At first, the role of the second spectral dispersion element is described. In the spectral dispersion by the first spectral dispersion element 5 (or any one of 5A, 5B, and 5C) there are formed primary light, secondary light, and further higher dimension divided spectra, and they are overlapped. And, conventionally, practice is made to remove the obstacle light with an optical filter to obtain the desired wavelength spectrum from the overlapped spectra.

In this practice, besides the separation by an optical filter, separation means for higher dimension by the secondary spectral dispersion element practiced with an echelle spectroscope is introduced into the optical systems of the above embodiments 1 to 4. In this case, the light detecting part 9 may be an imaging device made by plural disposition of fine detectors in a plane form or may comprise combination of an output slit 13 with a single detector 14. In the spectroscope of the present invention, simultaneous measurement of whole wavelength by the high dimension dispersion using echelle grating is feasible. In this practice, as a brighter optical system is aimed at by scanning grating, explanation is made by the utilization up to the secondary light.

In the light spectrally dispersed for example in a horizontal direction by the primary spectral dispersion element, there is overlapping of primary light and secondary light. When this is dispersed in a vertical direction with a secondary spectral dispersion element, two spectra 101, 102 of primary light spectrum and secondary light spectrum form images on an imaging device, as shown in FIG. 10. In this FIG. 10, the lower spectral band 102 is the spectrum of the secondary light, of which the left side shows a short wavelength. By introduction of the secondary spectral dispersion element, the long wavelength shows displacement upward. As the separated primary light has the longer wavelength than the secondary light, its spectrum is focused in the upper zone. When the grating is rotated, the spectrum desired to be measured can be selected, but by this rotation the light emission line having the shape of the input slit 2 shifts horizontally. Accordingly, it is possible to measure the desired wavelength one after another.

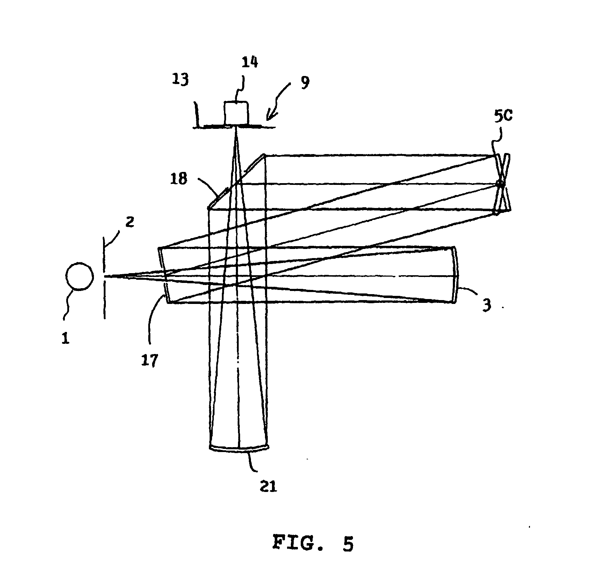

With respect to the procedures for setting the above second spectral dispersion element on the spectroscope of the foregoing embodiments, there are the following four styles. These will be simply explained below with reference to FIG. 5 through FIG. 8. As FIG. 5 through FIG. 8 are based on the fourth embodiments shown in FIG. 4, and, with the same numbers assigned to the corresponding members, the explanation of them is omitted.

Firstly, FIG. 5 shows the first mode (fifth embodiment). Instead of one of the two concave mirrors 3, 7C, e.g., the second concave mirror 7C, a concave grating 21 is provided as the second element, for making spectral dispersion in a vertical direction. In this constitution, after making spectral dispersion in a horizontal direction with a first grating 5C, spectral dispersion is to be made in a vertical direction with a concave grating 21. In this case, this concave grating 21 is required to be oriented slightly upward or downward, and off-axial optical system is formed. However, as its off-axial angle is extremely small, no significant coma or astigmatism aberration should be formed. This mode can be similarly applied to other embodiments 1 to 3.

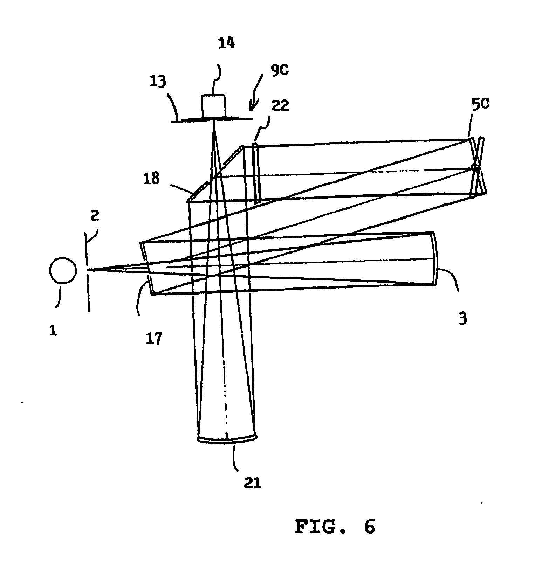

And, FIG. 6 shows the second mode (sixth embodiment). In this mode, a transmission type grating 22 is provided on the position in which the light in the light path does not advance in both directions, e.g., between the first grating 5C and the second plane mirror 18, as a second spectral dispersion element for making the transmission type grating 22 spectral dispersion in a vertical direction. In this constitution, after spectrally dispersing with a first grating 5C in a horizontal direction, spectral dispersion is to be made with a transmission type grating 22 in a vertical direction. Of course, it is allowable to provide a transmission type grating 22 in a light path lying in a former stage than the first grating 5C. This mode may be similarly applicable to other first to third embodiments.

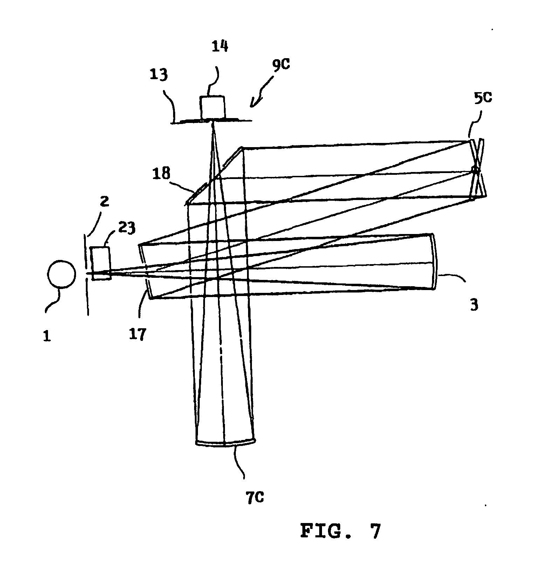

FIG. 7 shows the third mode (seventh embodiment). In this mode, a prism 23 is provided on the position of no bi-directional advance of light in the light path, e.g. between the input slit 2 and the first plane mirror 17, as a second spectral dispersion element for making spectral dispersion in vertical direction. In this constitution, after making vertical spectral dispersion with a prism 23, spectral dispersion is to be made in horizontal direction with a first grating 5C. Of course, it is allowable to provide a prism 23 in the light path lying in a latter stage than the first grating 5C. This mode may be similarly applicable to other first to third embodiments.

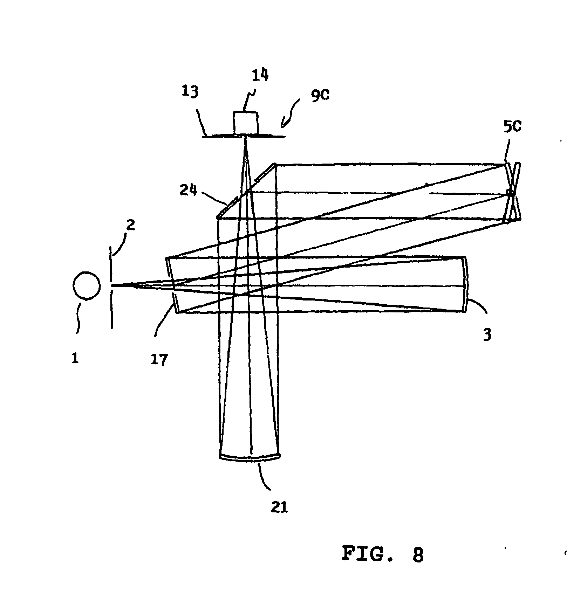

Furthermore, FIG. 8 shows the fourth mode (eighth embodiment). In this mode, instead of a single plane mirror, e.g., second plane mirror 18, a concave grating 24 having an aperture 24a for passing light at the central part is provided as a second spectral dispersion element for making spectral dispersion in vertical direction. In this constitution, after making spectral dispersion in horizontal direction with a first grating 5C, spectral dispersion is to be made in vertical direction with a concave grating 24. This mode is applicable also to an optical system having only one plane mirror, and accordingly, it may be similarly applicable to the second or the third embodiment.

And, in the embodiment shown in Fig. 1 - Fig. 4, there may be used as a grating 5 a bi-directional spectral dispersion element for spectrally dispersing the incident light in two different directions. When such system is adopted, the whole spectroscope constitution can be of a compact size.

As described above, according to the present invention, it is possible to obtain a spectroscope which does not show aberrations such as coma or astigmatism, which shows large throughput of light, and which allows to make spectrometry in high resolution and high precision. Thus, there can be obtained a suitable one as a spectroscope for measuring instrument for which high precision measurement is required such as atomic emission spectral analysis, Raman spectrometry, etc.

Although the concave mirrors of the invention are usually spheric mirrors, soma applications can be made using parabolic mirrors. The same advantages would then come from the invention.

## Claims

1. A spectroscope for receiving a light beam from a source comprising:
- an input slit for being illuminated by the source (52),
- a collimator concave mirror for receiving the light beam from the input slit with an incidence optical axis and reflecting it with an outgoing optical axis (53),
- a grating for receiving the light beam from the collimator mirror,
- means for rotating the grating for wavelength scanning
- a focusing concave mirror (55) for receiving the light beam from the grating with an incidence optical axis and reflecting it with an outgoing optical axis,
- an output slit, for receiving the light beam from the focusing mirror (56),
- a detector for receiving the light beam passing through the output slit,
**characterized in that** the input slit, the concave mirrors and the output slit are arranged such that the incidence optical axis and the outgoing optical axis have the same direction in each one of the concave mirrors for the light beam from the input slit and passing through the output slit whatever the wavelength of said beam.

2. A spectroscope according to claim 1 in which the grating is provided with a central aperture for passing a light beam.

3. A spectroscope according to claim 2 in which both the light beam from the input slit to the collimator mirror and the light beam from the focusing mirror to the detector are passing through the aperture of the grating.

4. A spectroscope according to claim 2:
- which comprises an incidence plane mirror provided with a central aperture for passing a light beam, in which
- the light beam from the input slit to the collimator mirror is passing through the aperture of the incidence plane mirror
- the light beam from the collimator mirror to the grating is reflected by the incidence plane mirror and
- the light beam from the focusing mirror to the detector is passing through the aperture of the grating.

5. A spectroscope according to claim 2:
- which comprises an output plane mirror provided with a central aperture for passing a light beam, in which
- the light beam from the input slit to the collimator mirror is passing through the aperture of the grating
- the light beam from the grating to focusing mirror being reflected by the output plane mirror and
- the light beam from the focusing mirror to the output slit is passing through the aperture of the output plane mirror.

6. A spectroscope according to claim 1:
- which comprises an incidence plane mirror provided with a central aperture for passing a light beam, and
- an output plane mirror provided with a central aperture for passing a light beam, in which
- the light beam from the input slit to the collimator mirror is passing through the aperture of the incidence plane mirror
- the light beam from the collimator mirror to the grating being reflected by the incidence plane mirror
- the light beam from the focusing mirror to the detector is passing through the aperture of the grating
- the light beam from the grating to focusing mirror being reflected by the output plane mirror and
- the light beam from the focusing mirror to the output slit is passing through the aperture of the output plane mirror.

7. The spectroscope according to any one of claims 2 to 6, comprising addition of elements for spectrally dispersing light at an angle of 45° - 135° with the direction of dispersion of light by grating.

8. The spectroscope according to any one of claims 1 to 6, wherein there is used as a second spectral dispersion element one of the two concave mirrors.

9. The spectroscope according to any one of claims 2 to 6, wherein there is used as a second spectral dispersion element a transmission type grating on a position in which the light in the light path does not advance in both directions.

10. The spectroscope according to any one of claims 2 to 6, wherein a prism is used as a second spectral dispersion element on a position in which the light in the light path does not advance in both directions.

11. The spectroscope according to any one of claims 3 to 6, wherein a plane mirror is used as a second spectral dispersion element.

12. The spectroscope according to any one of claims 1 to 6, wherein there is used as a grating a bi-directional spectral dispersion element for spectrally dispersing the incident light in two different directions.

## Patentansprüche

1. Spektroskop zum Empfangen eines Lichtstrahls von einer Quelle, das Folgendes umfasst:
- einen Eingangsschlitz, der von der Quelle (52) beleuchtet wird,
- einen konkaven Kollimatorspiegel zum Empfangen des Lichtstrahls von dem Engangsschlitz mit einer optischen Einfallsachse, der den Lichtstrahl mit einer optischen Ausgangsachse (53) reflektiert,
- ein Gitter zum Empfangen des Lichtstrahls von dem Kollimatorspiegel,
- Mittel zum Drehen des Gitters zum Wellenlängenscannen,
- einen konkaven Fokussierspiegel (55) zum Empfangen des Lichtstrahls von dem Gitter mit einer optischen Einfallsachse, und der den Lichtstrahl mit einer optischen Ausgangsachse reflektiert,
- einen Ausgangsschlitz zum Empfangen des Lichtstrahls von dem Fokussierspiegel (56),
- einen Sensor zum Empfangen des Lichtstrahls, der durch den Ausgangsschlitz durchgeht,
**dadurch gekennzeichnet, dass** der Eingangsschlitz, die konkaven Spiegel und der Ausgangsschlitz derart angeordnet sind, dass die optische Einfallsachse und die optische Ausgangsachse die gleiche Richtung in jedem der konkaven Spiegel für den Lichtstrahl von dem Eingangsschlitz und durch den Ausgangsschlitz verlaufend haben, egal welche Wellenlänge der Strahl hat.

2. Spektroskop nach Anspruch 1, bei dem das Gitter mit einer zentralen Öffnung zum Durchgehen eines Lichtstrahls versehen ist.

3. Spektroskop nach Anspruch 2, bei dem sowohl der Lichtstrahl von dem Eingangsschlitz zu dem Kollimatorspiegel als auch der Lichtstrahl von dem Fokussierspiegel zu dem Sensor durch die Öffnung des Gitters laufen.

4. Spektroskop nach Anspruch 2,
- das einen Einfallsebenenspiegel umfasst, der mit einer zentralen Öffnung für das Durchgehen eines Lichtstrahls versehen ist, bei dem
- der Lichtstrahl von dem Eingangsschlitz zu dem Kollimatorspiegel durch die Öffnung des Einfallsebenenspiegels durchgeht,
- der Lichtstrahl von dem Kollimatorspiegel zu dem Gitter von dem Einfallsebenenspiegel reflektiert wird und
- der Lichtstrahl von dem Fokussierspiegel zu dem Sensor durch die Öffnung des Gitters durchgeht.

5. Spektroskop nach Anspruch 2:
- das einen Ausgangsebenenspiegel umfasst, der mit einer zentralen Öffnung für das Durchgehen eines Lichtstrahls versehen ist, bei dem
- der Lichtstrahl von dem Eingangsschlitz zu dem Kollimatorspiegel durch die Öffnung des Gitters durchgeht,
- der Lichtstrahl von dem Gitter zu dem Fokussierspiegel von dem Ausgangsebenenspiegel reflektiert wird und
- der Lichtstrahl von dem Fokussierspiegel zu dem Ausgangsschlitz durch die Öffnung des Ausgangsebenenspiegels durchgeht.

6. Spektroskop nach Anspruch 1:
- das einen Einfallsebenenspiegel umfasst, der mit einer zentralen Öffnung für das Durchgehen eines Lichtstrahls versehen ist, und
- einen Ausgangsebenenspiegel, der mit einer zentralen Öffnung zum Durchgehen eines Lichtstrahls versehen ist, bei dem
- der Lichtstrahl von dem Eingangsschlitz zu dem Kollimatorspiegel durch die Öffnung des Einfallsebenenspiegels durchgeht,
- der Lichtstrahl von dem Kollimatorspiegel zu dem Gitter von dem Einfallsebenenspiegel reflektiert wird,
- der Lichtstrahl von dem Fokussierspiegel zu dem Sensor durch die Öffnung des Gitters durchgeht,
- der Lichtstrahl von dem Gitter zu dem Fokussierspiegel von dem Ausgangsebenenspiegel reflektiert wird und
- der Lichtstrahl von dem Fokussierspiegel zu dem Ausgangsschlitz durch die Öffnung des Ausgangsebenenspiegels durchgeht.

7. Spektroskop nach einem der Ansprüche 2 bis 6, das das Hinzufügen von Elementen für das spektrale Streuen von Licht in einem Winkel von 45° - 135° zu der Richtung der Streuung des Lichts durch das Gitter umfasst.

8. Spektroskop nach einem der Ansprüche 1 bis 6, wobei als zweites spektrales Streuungselement einer der zwei konkaven Spiegel verwendet wird.

9. Spektroskop nach einem der Ansprüche 2 bis 6, wobei als zweites spektrales Streuungselement ein Gitter des Sendetyps auf einer Position verwendet wird, in der das Licht in dem Lichtpfad nicht in beide Richtungen fortschreitet.

10. Spektroskop nach einem der Ansprüche 2 bis 6, wobei ein Prisma als zweites spektrales Streuungselement auf einer Position verwendet wird, in der das Licht in dem Lichtpfad nicht in beide Lichtungen fortschreitet.

11. Spektroskop nach einem der Ansprüche 3 bis 6, wobei ein ebener Spiegel als zweites spektrales Streuungselement verwendet wird.

12. Spektroskop nach einem der Ansprüche 1 bis 6, wobei als Gitter ein bidirektionales spektrales Streuungselement verwendet wird, um das einfallende Licht spektral in zwei verschiedene Richtungen zu streuen.

## Revendications

1. Spectroscope destiné à recevoir un faisceau de lumière à partir d'une source comprenant :
- une fente d'entrée destinée à être éclairée par la source (52),
- un miroir concave de collimateur destiné à recevoir le faisceau de lumière à partir de la fente d'entrée avec un axe optique d'incidence et à le réfléchir avec un axe optique de sortie (53),
- un réseau pour recevoir le faisceau de lumière à partir du miroir de collimateur,
- un moyen pour faire tourner le réseau pour le balayage de longueur d'onde,
- un miroir concave de focalisation (55) pour recevoir le faisceau de lumière à partir du réseau avec un axe optique d'incidence et le réfléchir avec un axe optique de sortie,
- une fente de sortie pour recevoir le faisceau de lumière à partir du miroir de focalisation (56),
- un détecteur pour recevoir le faisceau de lumière traversant la fente de sortie,
**caractérisé en ce que** la fente d'entrée, les miroirs concaves et la fente de sortie sont agencés afin que l'axe optique d'incidence et l'axe optique de sortie présentent la même direction dans chacun des miroirs concaves pour le faisceau de lumière à partir de la fente d'entrée et traversant la fente de sortie quelle que soit la longueur d'onde dudit faisceau.

2. Spectroscope selon la revendication 1, dans lequel le réseau est muni d'une ouverture centrale pour faire passer un faisceau de lumière.

3. Spectroscope selon la revendication 2, dans lequel tant le faisceau de lumière que la fente d'entrée au miroir de collimateur et le faisceau de lumière à partir du miroir de focalisation au détecteur traversent l'ouverture du réseau.

4. Spectroscope selon la revendication 2 :
- qui comprend un miroir plan d'incidence muni d'une ouverture centrale pour faire passer un faisceau de lumière, dans lequel
- le faisceau de lumière à partir de la fente d'entrée au miroir de collimateur traverse l'ouverture du miroir plan d'incidence,
- le faisceau de lumière à partir du miroir de collimateur au réseau est réfléchi par le miroir plan d'incidence et
- le faisceau de lumière à partir du miroir de focalisation au détecteur traverse l'ouverture du réseau.

5. Spectroscope selon la revendication 2 :
- qui comprend un miroir plan de sortie muni d'une ouverture centrale pour faire passer un faisceau de lumière, dans lequel
- le faisceau de lumière à partir de la fente d'entrée au miroir de collimateur traverse l'ouverture du réseau,
- le faisceau de lumière à partir du réseau au miroir de focalisation est réfléchi par le miroir plan de sortie et
- le faisceau de lumière à partir du miroir de focalisation à la fente de sortie traverse l'ouverture du miroir plan de sortie.

6. Spectroscope selon la revendication 1 :
- qui comprend un miroir plan d'incidence muni d'une ouverture centrale pour faire passer un faisceau de lumière ; et
- un miroir plan de sortie muni d'une ouverture centrale pour faire passer un faisceau de lumière, dans lequel :
- le faisceau de lumière à partir de la fente d'entrée au miroir de collimateur traverse l'ouverture du miroir plan d'incidence,
- le faisceau de lumière à partir du miroir de collimateur au réseau est réfléchi par le miroir plan d'incidence,
- le faisceau de lumière à partir du miroir de focalisation au détecteur traverse l'ouverture du réseau,
- le faisceau de lumière à partir du réseau au miroir de focalisation est réfléchi par le miroir plan de sortie et
- le faisceau de lumière à partir du miroir de focalisation à la fente de sortie traverse l'ouverture du miroir plan de sortie.

7. Spectroscope selon l'une quelconque des revendications 2 à 6, comprenant l'addition d'éléments pour disperser spectralement la lumière selon un angle de 45° - 135° avec la direction de dispersion de la lumière par le réseau.

8. Spectroscope selon l'une quelconque des revendications 1 à 6, dans lequel on utilise comme deuxième élément de dispersion spectrale un des deux miroirs concaves.

9. Spectroscope selon l'une quelconque des revendications 2 à 6, dans lequel on utilise comme deuxième élément de dispersion spectrale un réseau de type à transmission sur une position dans laquelle la lumière dans le trajet de lumière n'avance pas dans les deux directions.

10. Spectroscope selon l'une quelconque des revendications 2 à 6, dans lequel on utilise un prisme comme deuxième élément de dispersion spectrale sur une position dans laquelle la lumière dans le trajet de lumière n'avance pas dans les deux directions.

11. Spectroscope selon l'une quelconque des revendications 3 à 6, dans lequel on utilise un miroir plan comme deuxième élément de dispersion spectrale.

12. Spectroscope selon l'une quelconque des revendications 1 à 6, dans lequel on utilise comme réseau un élément de dispersion spectrale bidirectionnel pour disperser spectralement la lumière incidente dans deux directions différentes.
